(19) **Europäisches Patentamt / European Patent Office / Office européen des brevets**

(11) **EP 2 737 339 B1**

(12) **FASCICULE DE BREVET EUROPEEN**

(45) Date de publication et mention
de la délivrance du brevet:
**08.04.2015 Bulletin 2015/15**

(21) Numéro de dépôt: **12741301.1**

(22) Date de dépôt: **23.07.2012**

(51) Int Cl.:
**G01T 1/17** $^{(2006.01)}$

(86) Numéro de dépôt international:
**PCT/EP2012/064439**

(87) Numéro de publication internationale:
**WO 2013/014132 (31.01.2013 Gazette 2013/05)**

(54) **DISPOSITIF ET PROCEDE DE TRAITEMENT POUR UNE MESURE SPECTROMETRIQUE D'UN FLUX DE PHOTONS**

VERARBEITUNGSVORRICHTUNG UND -VERFAHREN ZUR SPEKTROMETRISCHEN MESSUNG EINES PHOTONENFLUSSES

PROCESSING DEVICE AND METHOD FOR THE SPECTROMETRIC MEASUREMENT OF A PHOTON FLUX

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2011 FR 1156832**

(43) Date de publication de la demande:
**04.06.2014 Bulletin 2014/23**

(73) Titulaire: **Multix SA
92200 Neuilly sur Seine (FR)**

(72) Inventeurs:
• **MARCHE, Eric
38960 Saint Etienne de Crossey (FR)**

• **BOUDOU, Caroline
38340 Voreppe (FR)**
• **RADISSON, Patrick
38640 Claix (FR)**

(74) Mandataire: **Derval, Estelle et al
Marks & Clerk France
Conseils en Propriete Industrielle
Immeuble Visium
22, avenue Aristide Briand
94117 Arcueil Cedex (FR)**

(56) Documents cités:
**WO-A2-03/040757     US-A- 4 692 626
US-A- 5 873 054     US-A1- 2005 242 979
US-B1- 7 504 636**

Printed by Jouve, 75001 PARIS (FR)

## Description

L'invention se situe dans le domaine de l'imagerie par rayonnement ionisant, notamment par rayonnement X. Elle s'applique à l'imagerie médicale et au contrôle non destructif tel que le contrôle de bagages. Elle concerne un dispositif et un procédé de traitement d'un flux de photons.

Les systèmes d'imagerie par rayonnement X sont notamment utilisés pour le contrôle de bagages dans des aéroports ou dans des lieux sécurisés. Un tel système d'imagerie comprend une source de rayonnement X soumettant les bagages à un flux de photons X et un détecteur à semi-conducteur recevant les photons X ayant traversé les bagages. En fonction de l'absorption du rayonnement X par les bagages, il est possible d'analyser le contenu des bagages. L'analyse du contenu des bagages et l'évaluation de sa dangerosité sont des étapes plus ou moins complexes et automatisées selon qu'il s'agit de bagages destinés à la soute ou de bagages transportés par les passagers en cabine. Dans les deux cas, les systèmes d'imagerie par rayonnement X ont pour objectif de détecter des substances dangereuses telles que des explosifs et des matières inflammables. Avec l'évolution des exigences en matière de sécurité, il devient nécessaire de pouvoir déterminer tout type de substance afin, par exemple, d'identifier la présence de plusieurs substances qui, combinées entre elles, peuvent produire des explosifs. Les détecteurs des systèmes d'imagerie par rayonnement X actuels comprennent généralement deux éléments sensibles superposés. Un premier élément sensible détecte les photons à relativement haute énergie et un deuxième élément sensible détecte les photons à relativement basse énergie. Ces détecteurs, dits bi-énergie, intègrent les photons sur toute la durée d'exposition et conduisent à la mesure de deux quantités de photons dans deux plages d'énergie différentes. Ils permettent principalement de différencier les matériaux organiques des matériaux inorganiques. Ils permettent également de déterminer la densité des matériaux traversés par les photons X et donc leur composition. Cependant, cette détermination de densité n'est pas précise et conduit à des ambiguïtés de détection. Une raison de ce manque de précision vient du fait que les plages d'énergie des deux éléments sensibles se recouvrent partiellement. En pratique, les systèmes d'imagerie par rayonnement X actuels peuvent difficilement différencier, parmi les matériaux organiques, certains matériaux d'usage courant de matériaux explosifs.

Plus récemment, des systèmes d'imagerie par rayonnement X ont été développés afin de s'approcher d'une mesure spectrométrique en énergie d'un flux de photons. Ces systèmes comportent plusieurs circuits de traitement chacun adaptés à une plage d'énergie donnée. Certains systèmes comportent jusqu'à 8 circuits de traitement. Cependant, ces systèmes présentent l'inconvénient de n'être adaptés que pour un certain flux de photons. Or, compte tenu de la diversité des matériaux présents dans les bagages, le flux de photons peut typiquement varier entre $10^4$ et $10^8$ photons par millimètre carré et par seconde, soit un rapport de $10^4$. Si le système d'imagerie est adapté à un flux de photons relativement faible, un flux de photons plus important conduit à une fonction de comptage dégradée, les photons n'étant plus comptés individuellement. Il en résulte une image dégradée. A l'inverse, si le système d'imagerie est adapté à un flux de photons relativement important, la mesure de l'énergie de chaque photon est moins précise, quel que soit le flux de photons reçu.

Le brevet US7504636B1 divulgue un procédé de traitement pour une mesure spectrométrique en énergie d'un flux de photons pouvant être reçu par un élément photosensible d'un détecteur, le procédé comportant les étapes successives suivantes :

- convertir chaque photon reçu par l'élément photosensible en un signal électrique dont une caractéristique est représentative de l'énergie du photon considéré,
- filtrer chaque signal électrique par un premier filtre passe-bas,
- filtrer chaque signal électrique par un deuxième filtre passe-bas,
- déterminer la caractéristique de chaque signal électrique filtré, et
- générer un spectre en énergie pour le flux de photons reçu en fonction de la caractéristique des signaux électriques filtrés.

Quant au document US2005242979A1, il divulgue de façon générale un circuit comprenant deux filtres passe-bas dont la fréquence de coupure peut varier.

Un but de l'invention est notamment de remédier à tout ou partie des inconvénients précités en permettant une mesure spectrométrique en énergie d'un flux de photons adaptée à ce flux de photons. A cet effet, l'invention a pour objet un procédé tel que précisé dans la revendication 1 de traitement pour une mesure spectrométrique en énergie d'un flux de photons pouvant être reçu par un élément photosensible d'un détecteur. Le procédé comporte les étapes successives suivantes :

- convertir chaque photon reçu par l'élément photosensible en un signal électrique dont une caractéristique est représentative de l'énergie du photon considéré,
- filtrer chaque signal électrique par un premier filtre passe-bas dont la fréquence de coupure est ajustée en fonction du flux de photons, plus le flux étant important, plus la fréquence de coupure étant haute,
- déterminer la caractéristique de chaque signal électrique filtré,
- générer un spectre en énergie pour le flux de photons reçu en fonction de la caractéristique des signaux électriques filtrés, et
- filtrer le spectre en énergie par un deuxième filtre passe-bas dont la fréquence de coupure est ajustée en fonction du flux de photons, plus le flux étant important, plus la fréquence de coupure étant basse.

Le spectre en énergie peut être généré sous forme d'un histogramme dans lequel les classes sont des plages d'énergie distinctes, l'occurrence de chaque classe étant le nombre de photons dont l'énergie est comprise dans la plage d'énergie de la classe considérée. La génération du spectre sous forme d'un histogramme permet d'ajuster la fréquence de coupure du deuxième filtre passe-bas en déterminant simplement le nombre de classes de l'histogramme, plus le flux étant important, moins l'histogramme comportant de classes.

Selon une forme particulière de réalisation, chaque photon reçu par l'élément photosensible est converti en une impulsion dont l'intégrale est proportionnelle à l'énergie du photon considéré.

Lorsque le flux de photons est reçu pendant des intervalles d'acquisition prédéterminés et successifs, les fréquences de coupure du premier et du deuxième filtre passe-bas peuvent être ajustées, pour un intervalle d'acquisition donné, en fonction du flux de photons déterminé pour le précédent intervalle d'acquisition.

Le flux de photons est par exemple déterminé par les étapes suivantes :

- déterminer l'énergie photonique totale $E_T$ reçue par l'élément photosensible pendant le précédent intervalle d'acquisition,
- déterminer l'énergie photonique moyenne $E_M$ des photons reçus par l'élément photosensible pendant le précédent intervalle d'acquisition,
- déterminer le rapport $N_{eff}$ de l'énergie photonique totale $E_T$ sur l'énergie photonique moyenne $E_M$, le quotient dudit rapport $N_{eff}$ sur une durée du précédent intervalle d'acquisition donnant le flux de photons.

L'invention a également pour objet un dispositif tel que défini dans la revendication 6 de traitement pour une mesure spectrométrique en énergie d'un flux de photons pouvant être reçu par un élément photosensible d'un détecteur, l'élément photosensible convertissant chaque photon en un signal électrique dont une caractéristique est représentative de l'énergie du photon reçu. Le dispositif comporte :

- un circuit de mise en forme comprenant un premier filtre passe-bas filtrant chaque signal électrique, la fréquence de coupure du premier filtre passe-bas étant ajustée en fonction du flux de photons, plus le flux étant important, plus la fréquence de coupure étant haute,
- un circuit de mesure déterminant la caractéristique de chaque signal électrique filtré,
- un circuit de construction de spectres générant un spectre en énergie pour le flux de photons reçu en fonction de la caractéristique des signaux électriques filtrés, et

- un filtre de lissage comprenant un deuxième filtre passe-bas filtrant le spectre en énergie, la fréquence de coupure du deuxième filtre passe-bas étant ajustée en fonction du flux de photons, plus le flux étant important, plus la fréquence de coupure étant basse.

L'invention a notamment pour avantage qu'elle permet de conserver une qualité d'image sensiblement constante quel que soit le flux de photons reçu. En outre, l'analyse de la composition des objets par mesure spectrométrique peut également être sensiblement constante. En effet, un objet peu atténuant, conduisant à un flux de photons relativement important et à une analyse spectrale en énergie relativement difficile, ne comporte généralement que peu de matériaux à identifier. A l'inverse, un objet fortement atténuant, conduisant à un flux de photons relativement faible et à une analyse spectrale relativement aisée, comporte généralement plusieurs matériaux à identifier.

L'invention sera mieux comprise et d'autres avantages apparaîtront à la lecture de la description qui va suivre, faite en regard de dessins annexés sur lesquels :

- la figure 1 représente schématiquement un système d'imagerie par rayonnement X pour le contrôle de bagages ;
- la figure 2 représente, par un synoptique, un exemple de dispositif de traitement selon l'invention ;
- la figure 3 représente, sous forme d'un diagramme, un exemple de procédé de traitement selon l'invention.

L'invention s'applique à l'imagerie médicale et au contrôle non destructif d'objets par rayonnement ionisant. Elle concerne en particulier les systèmes d'imagerie par rayonnement X de moyenne énergie, c'est-à-dire d'énergie comprise entre environ 20 keV et 180 keV, et à fort flux de photons, c'est-à-dire dont le flux est compris entre $10^4$ et $10^8$ photons par millimètre carré et par seconde.

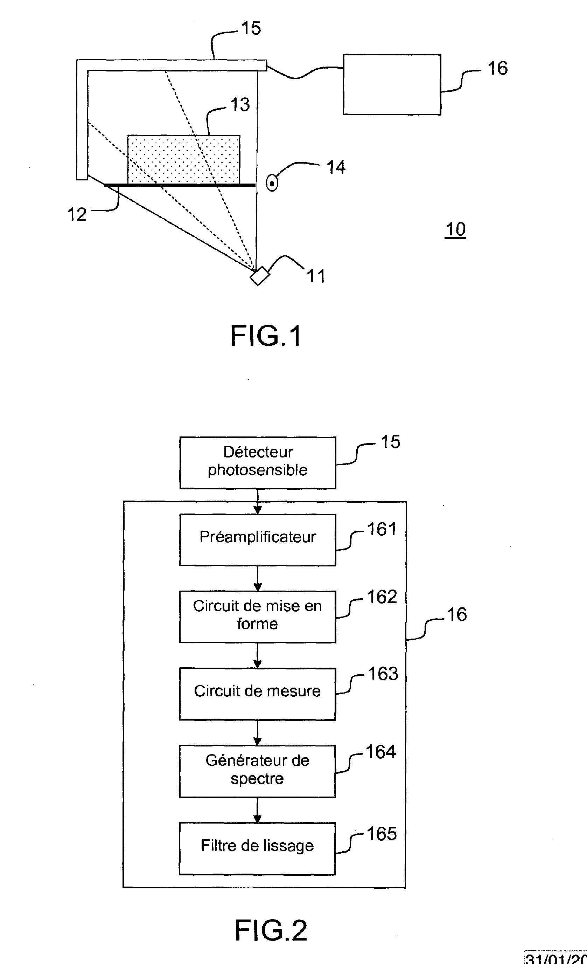

La figure 1 représente schématiquement un système d'imagerie par rayonnement X pour le contrôle de bagages. Le système d'imagerie 10 comprend une source de rayons X 11, un tapis roulant 12 apte à transporter des bagages 13 dans la direction représentée par la flèche 14, un détecteur à semi-conducteur 15 et un dispositif de traitement 16 connecté au détecteur 15. Le détecteur 15 représenté sur la figure 1 est un détecteur linéaire en L. Il comprend des éléments photosensibles tels que des photodiodes ou des photoconducteurs disposés sur deux lignes perpendiculaires entre elles. Le détecteur 15 peut également être un détecteur à deux dimensions et comporter une matrice d'éléments photosensibles. Lorsqu'un élément photosensible du détecteur 15 est exposé à un photon X, il convertit ce photon X en un paquet de charges dont le nombre est proportionnel à l'énergie du photon. La source de rayons X émet un flux de photons en direction du détecteur 15 à travers le tapis roulant 12. Le spectre du flux de rayons X reçu en l'absence d'objets est déterminé préalablement à l'analyse d'objets. Ainsi, par comparaison de ce spectre avec le spectre du flux de rayons X reçu en présence d'un objet à analyser; il est possible de déterminer le flux de rayons X absorbé par l'objet à analyser.

La figure 2 représente, par un synoptique, un exemple de dispositif de traitement selon l'invention. Le dispositif de traitement 16 comprend un préamplificateur 161 de type intégrateur, un circuit de mise en forme 162, un circuit de mesure 163, un générateur de spectre 164 et un filtre de lissage 165 formant une chaîne de traitement. Le dispositif de traitement 16 peut soit comporter une seule chaîne de traitement pour l'ensemble des éléments photosensibles du détecteur 15, auquel cas les paquets de charges issus des différents éléments photosensibles sont traités successivement, soit comporter une chaîne de traitement pour chaque élément photosensible, auquel cas les paquets de charges sont traités simultanément. Le préamplificateur 161 est apte à recevoir les paquets de charge d'un élément photosensible du détecteur 15 et à transformer chaque paquet de charges en une impulsion de tension dont l'intégrale est proportionnelle au nombre de charges du paquet de charges. L'intégrale de chaque impulsion de tension est donc proportionnelle à l'énergie de chaque photon X reçu. Le circuit de mise en forme 162 filtre chaque impulsion de tension, comme expliqué ci-dessous, et le circuit de mesure 163 détermine les caractéristiques de chaque impulsion de tension filtrée. En particulier, le circuit de mesure 163 peut déterminer l'amplitude maximale de chaque impulsion de tension et son intégrale. Un flux de rayons X peut être reçu soit de façon discontinue pendant une durée d'acquisition donnée, soit de façon continue dans le temps. Dans ce dernier cas, la réception des photons X est découpée dans le temps en des acquisitions successives. Le générateur de spectre 164 construit, pour chaque acquisition et pour chaque élément photosensible, un spectre en énergie des photons X reçus pendant la durée de cette acquisition par l'élément photosensible considéré. Un spectre en énergie peut être représenté sous forme d'un histogramme dans lequel les classes sont des plages d'énergie distinctes, l'occurrence de chaque classe étant le nombre de photons X dont l'énergie est comprise dans la plage d'énergie de la classe considérée. Dans le dispositif de traitement 16 décrit en référence à la figure 2, l'énergie des photons X est convertie en une impulsion de tension dont l'intégrale dépend de l'énergie des photons X. Le spectre en énergie peut donc être construit en regroupant les impulsions de tension dans différentes classes en fonction de leur intégrale. Il est possible, lors de la génération des spectres en énergie, de ne pas prendre en compte des impulsions de tension dont les propriétés (largeur, forme, etc.) ne semblent pas cohérentes. Un facteur multiplicatif peut être appliqué afin de compenser la non-prise en compte de ces impulsions de tension. Le filtre de lissage 165 filtre le spectre en énergie, comme expliqué ci-dessous. L'invention n'est pas seulement applicable aux systèmes d'imagerie dans lesquels les détecteurs convertissent les photons X en paquets de charges. Elle s'applique à tout système d'imagerie dans lequel l'ensemble détecteur-dispositif de traitement convertit un photon en un signal électrique dont au moins une caractéristique est représentative de l'énergie du photon reçu. Le signal électrique peut être aussi bien un signal analogique qu'un signal numérique. Il s'agit par exemple d'un signal impulsionnel. Le dispositif de traitement traite alors ces signaux afin de construire un spectre en énergie à partir de leur caractéristique.

Dans le dispositif de traitement selon l'invention, le circuit de mise en forme 162 comporte un filtre passe-bas dont la fréquence de coupure est ajustée en fonction du flux de photons X. Plus le flux de photons X est important, et plus la fréquence de coupure est haute. Autrement dit, plus les photons X arrivent à une fréquence moyenne élevée sur les éléments photosensibles du détecteur 15, et plus l'impulsion de tension doit être considérée sur une courte durée afin d'éviter les empilements. On parle d'empilement lorsque deux photons X sont reçus dans une durée trop courte pour pouvoir traiter chaque photon séparément. Pour un flux de photons X relativement faible, la mesure de l'intégrale d'une impulsion filtrée peut être précise et peu bruitée. Le spectre en énergie généré pour l'ensemble du flux de photons X d'une acquisition donnée peut donc être faiblement bruité. On parle de spectrométrie fine. A l'inverse, pour un flux de photons X relativement important, la mesure de l'intégrale d'une impulsion filtrée est relativement bruitée. Le spectre en énergie généré pour l'ensemble du flux de photons X d'une acquisition donnée est donc moins précis. Toutefois, la fréquence de coupure plus haute permet d'assurer correctement la fonction de comptage des photons X. L'image obtenue par comptage des photons X reçus par les différents éléments photosensibles du détecteur 15 n'est donc pas dégradée. L'ajustement de la fréquence de coupure du filtre passe-bas en fonction du flux de photons reçu permet donc de conserver une qualité d'image sensiblement constante quel que soit le flux de photons reçu. En ce qui concerne la mesure spectrométrique, un objet fortement atténuant conduit à une spectrométrie fine, et un objet moins atténuant conduit à une spectrométrie dégradée. Une analyse des matériaux constituant un objet basée sur les spectres en énergie générés pour les différents éléments photosensibles est donc moins précise pour un objet peu atténuant que pour un objet fortement atténuant. Néanmoins, un objet peu atténuant ne comprend généralement que peu de matériaux superposés. Leur identification en est donc facilitée. A l'inverse, si l'objet est fortement atténuant, cela est généralement dû au fait qu'il comprend de nombreux matériaux superposés. Le flux de rayons X reçu est alors moins important et conduit à une spectrométrie plus fine. Les différents matériaux peuvent donc encore être identifiés. La fréquence de coupure du filtre passe-bas du circuit de mise en forme 162 peut être ajustée soit individuellement pour chaque élément photosensible du détecteur 15 en fonction du flux de photons X reçu par cet élément photosensible, soit globalement pour tous les éléments photosensibles du détecteur 15 en fonction du flux moyen de photons X reçu par l'ensemble ou une partie des éléments photosensibles du détecteur 15.

Dans le cas d'acquisitions successives dans le temps, le flux de photons X considéré pour la détermination de la fréquence de coupure pour une acquisition donnée, d'ordre A, peut être le flux de photons déterminé lors de l'acquisition précédente, d'ordre A-1. Pour des applications de contrôle de bagages où les bagages se déplacent à vitesse constante, chaque acquisition correspond à une longueur de l'ordre du millimètre. Cette longueur étant relativement faible par rapport à la longueur des objets à analyser, la variation du flux de photons est relativement faible et conduit à une bonne approximation du flux de photons pour l'acquisition courante.

Le flux de photons X reçu par chaque élément photosensible du détecteur 15 peut être déterminé selon deux modes de réalisation. Selon un premier mode de réalisation, on détermine dans une première étape l'énergie photonique totale ET reçue. Cette énergie correspond à l'intégrale du signal délivré par l'élément photosensible considéré lors de l'acquisition précédente. Elle peut être déterminée par l'équation suivante :

$$E_T = \sum_{t=0}^{P-1} s_t$$

avec $s_t$ le t-ième échantillon de signal, et P le nombre d'échantillons dans l'acquisition.

Dans une deuxième étape, on détermine l'énergie photonique moyenne $E_M$ des photons X reçus. Cette énergie peut être déterminée par l'équation suivante :

$$E_M = \frac{\sum_{i=0}^{C-1} E_i N_i}{\sum_{i=0}^{C-1} N_i}$$

avec $E_i$ la i-ème classe d'énergie, Ni le nombre de photons (occurrences) dans cette classe d'énergie, et C le nombre de classes d'énergie.

Dans une troisième étape, on détermine le rapport de l'énergie photonique totale $E_T$ sur l'énergie photonique moyenne $E_M$. Ce rapport $N_{eff}$ correspond au nombre effectif de photons X reçus lors de l'acquisition précédente. Connaissant la durée de cette acquisition, il est possible d'en déduire le flux de photons X. Ce premier mode de réalisation présente l'avantage de ne pas nécessiter d'étalonnage.

Selon l'invention, on détermine dans une première étape l'énergie photonique totale $E_T$ reçue, comme indiqué précédemment. Dans une deuxième étape, on détermine le flux de photons X reçu à partir de cette intégrale et d'une table de valeurs prédéterminée. La table de valeurs est établie au préalable lors d'un étalonnage. L'étalonnage consiste à déterminer, pour différents niveaux de flux de photons, l'intégrale du signal associé à chaque niveau de flux de photons. Ce deuxième mode de réalisation présente l'avantage de nécessiter peu de calcul en temps réel.

L'ajustement de la fréquence de coupure du filtre passe-bas du circuit de mise en forme 162 permet une adaptation au flux de photons X reçu à un premier niveau. Le dispositif de traitement 16 selon l'invention peut en outre être adapté au flux de photons X à un deuxième niveau, à savoir au niveau de la génération du spectre en énergie. A cet effet, le spectre en énergie est lissé par le filtre de lissage 165 comprenant un filtre passe-bas dont la fréquence de coupure est ajustée en fonction du flux de photons X. Plus le flux de photons X est important, et plus la fréquence de coupure est basse. Le filtre passe-bas peut par exemple être réalisé par un ajustement du nombre de classes du spectre en énergie. Plus le flux de photons X est important, et plus le nombre de classes est réduit, les plages d'énergie étant alors élargies.

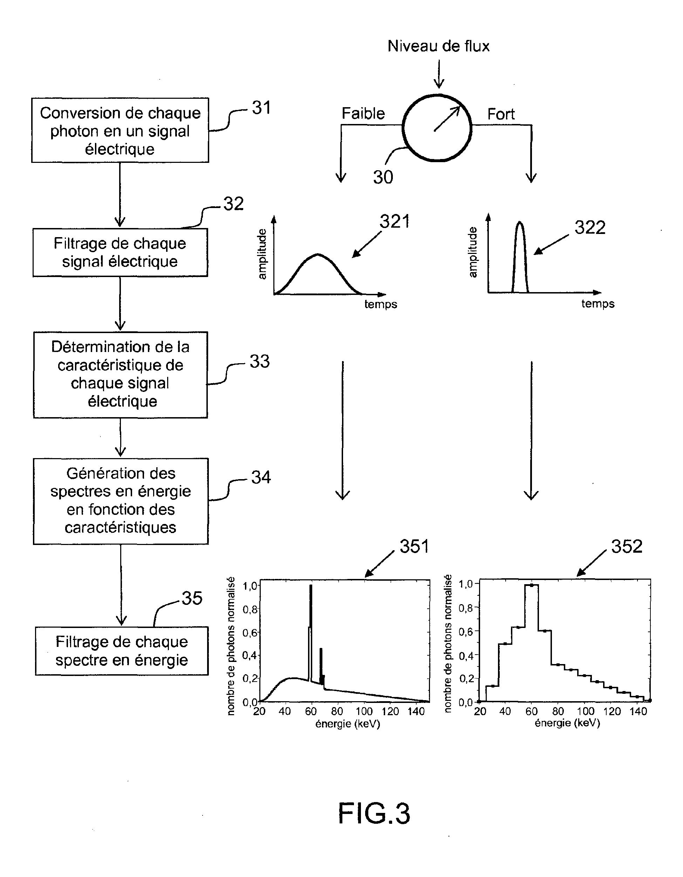

La figure 3 représente, sous forme d'un diagramme, un exemple de procédé de traitement selon l'invention. Dans ce procédé, les fréquences de coupure des filtrages réalisés pour la construction du spectre en énergie sont ajustées en fonction du niveau du flux de photons. Le niveau du flux de photons est par exemple déterminé lors de la précédente acquisition. Sur la figure 3, il est représenté symboliquement par une jauge 30 pouvant prendre différentes valeurs entre un niveau de flux minimum et un niveau de flux maximum. Dans une première étape 31, chaque photon reçu par un élément photosensible est converti en un signal électrique dont une caractéristique est représentative de son énergie. Le signal électrique est par exemple une impulsion de tension. Dans une deuxième étape 32, chaque impulsion de tension ou, plus généralement, chaque signal électrique dont une caractéristique est représentative de l'énergie du photon reçu, est filtré par le filtre passe-bas du circuit de mise en forme 162. Plus le niveau du flux de photons X est important, et plus la fréquence de coupure de ce filtre passe-bas est haute. Sur la figure 3, l'impact du filtre est représenté sous forme de deux graphiques 321 et 322. Le premier graphique 321 correspond à un faible niveau de flux, et donc à une fréquence de coupure basse. Le deuxième graphique 322 correspond à un fort niveau de flux, et donc à une fréquence de coupure haute. Dans le domaine temporel, une fréquence de coupure basse donne un signal dont la forme est étalée dans le temps, et une fréquence de coupure haute donne un signal de plus grande amplitude moins étalé dans le temps. Dans une troisième étape 33, l'intégrale de chaque impulsion ou, plus généralement, la caractéristique de chaque signal électrique est déterminée. Dans une quatrième étape 34, un spectre en énergie est construit pour chaque acquisition et pour chaque élément photosensible. Chaque spectre est construit en fonction de la caractéristique des différents signaux électriques de l'acquisition. Dans une cinquième étape 35, les spectres en énergie sont filtrés par un filtre passe-bas. Plus le flux de photons est important, et plus la fréquence de coupure de ce filtre est basse. Sur la figure 3, deux spectres en énergie 351 et 352 sont représentés. Le premier spectre 351 représente un exemple de spectre filtré obtenu pour un faible niveau de flux. Le deuxième spectre 352 représente un exemple de spectre filtré obtenu pour un fort niveau de flux. La résolution du spectre 351 est nettement inférieure à celle du spectre 352.

Différentes opérations de traitement du signal peuvent être réalisées à l'issue de la construction des spectres en énergie. Il s'agit par exemple d'une correction des empilements, c'est-à-dire la suppression, par traitement, de deux photons successifs convertis en un seul signal électrique, dont les caractéristiques permettent de l'identifier comme tel. Il peut également s'agir d'une correction du partage des charges, c'est-à-dire la reconstruction d'une seule impulsion à partir de deux impulsions issues d'un seul photon reçu par deux éléments photosensibles adjacents. Dans la mesure où les impulsions de tension des forts flux sont filtrées avec une fréquence de coupure haute, c'est-à-dire avec une constante de temps courte, une correction des empilements et une correction du partage des charges peuvent presque toujours être réalisées.

## Revendications

1. Procédé de traitement pour une mesure spectrométrique en énergie d'un flux de photons pouvant être reçu par un élément photosensible d'un détecteur (15), le procédé comportant les étapes successives suivantes :

   - convertir (31) chaque photon reçu par l'élément photosensible en un signal électrique dont une caractéristique est représentative de l'énergie du photon considéré,
   - filtrer (32) chaque signal électrique par un premier filtre passe-bas (162) dont la fréquence de coupure est ajustée en fonction du flux de photons, plus le flux étant important, plus la fréquence de coupure étant haute,
   - déterminer (33) la caractéristique de chaque signal électrique filtré,
   - générer (34) un spectre en énergie (351, 352) pour le flux de photons reçu en fonction de la caractéristique des signaux électriques filtrés, et
   - filtrer (35) le spectre en énergie (351, 352) par un deuxième filtre passe-bas (165) dont la fréquence de coupure est ajustée en fonction du flux de photons, plus le flux étant important, plus la fréquence de coupure étant basse.

2. Procédé selon la revendication 1, dans lequel le spectre en énergie (351, 352) est généré sous forme d'un histogramme dans lequel les classes sont des plages d'énergie distinctes, l'occurrence de chaque classe étant le nombre de photons dont l'énergie est comprise dans la plage d'énergie de la classe considérée, la fréquence de coupure du deuxième filtre passe-bas étant déterminée par le nombre de classes de l'histogramme, plus le flux étant important, moins l'histogramme comportant de classes.

3. Procédé selon l'une des revendications 1 et 2, dans lequel chaque photon reçu par l'élément photosensible est converti en une impulsion dont l'intégrale est proportionnelle à l'énergie du photon considéré.

4. Procédé selon l'une des revendications 1 à 3, dans lequel le flux de photons est reçu pendant un intervalle d'acquisition prédéterminé, les fréquences de coupure du premier et du deuxième filtre passe-bas étant ajustées en fonction du flux de photons déterminé pour le précédent intervalle d'acquisition.

5. Procédé selon la revendication 4, dans lequel le flux de photons est déterminé par les étapes suivantes :

   - déterminer l'énergie photonique totale $E_T$ reçue par l'élément photosensible pendant le précédent intervalle d'acquisition,
   - déterminer l'énergie photonique moyenne $E_M$ des photons reçus par l'élément photosensible pendant le précédent intervalle d'acquisition,
   - déterminer le rapport $N_{eff}$ de l'énergie photonique totale $E_T$ sur l'énergie photonique moyenne $E_M$, le quotient dudit rapport $N_{eff}$ sur une durée du précédent intervalle d'acquisition donnant le flux de photons.

6. Dispositif de traitement pour une mesure spectrométrique en énergie d'un flux de photons pouvant être reçu par un élément photosensible d'un détecteur (15), l'élément photosensible convertissant chaque photon en un signal électrique dont une caractéristique est représentative de l'énergie du photon reçu, le dispositif (15) étant **caractérisé en ce qu'**il comporte :

   - un circuit de mise en forme (162) comprenant un premier filtre passe-bas filtrant chaque signal électrique, la fréquence de coupure du premier filtre passe-bas étant ajustée en fonction du flux de photons, plus le flux étant important, plus la fréquence de coupure étant haute,

▪ un circuit de mesure (163) déterminant la caractéristique de chaque signal électrique filtré,

▪ un circuit de construction de spectres (164) générant un spectre en énergie (351, 352) pour le flux de photons reçu en fonction de la caractéristique des signaux électriques filtrés, et

▪ un filtre de lissage (165) comprenant un deuxième filtre passe-bas filtrant le spectre en énergie (351, 352), la fréquence de coupure du deuxième filtre passe-bas étant ajustée en fonction du flux de photons, plus le flux étant important, plus la fréquence de coupure étant basse.

**Patentansprüche**

1. Verarbeitungsverfahren für eine spektrometrische Energiemessung eines Photonenflusses, der von einem fotoempfindlichen Element eines Detektors (15) empfangen werden kann, wobei das Verfahren die folgenden aufeinander folgenden Schritte beinhaltet:

▪ Umwandeln (31) jedes von dem fotoempfindlichen Element empfangenen Photons in ein elektrisches Signal, von dem eine Charakteristik die Energie des betrachteten Photons repräsentiert;

▪ Filtern (32) jedes elektrischen Signals mit einem ersten Tiefpassfilter (162), dessen Grenzfrequenz in Abhängigkeit vom Photonenfluss justiert wird, wobei die Grenzfrequenz umso höher ist, je höher der Fluss ist;

▪ Ermitteln (33) der Charakteristik jedes gefilterten elektrischen Signals;

▪ Erzeugen (34) eines Energiespektrums (351, 352) für den empfangenen Photonenfluss in Abhängigkeit von der Charakteristik der gefilterten elektrischen Signale; und

▪ Filtern (35) des Energiespektrums (351, 352) mit einem zweiten Tiefpassfilter (165), dessen Grenzfrequenz in Abhängigkeit vom Photonenfluss justiert wird, wobei die Grenzfrequenz umso niedriger ist, je höher der Fluss ist.

2. Verfahren nach Anspruch 1, wobei das Energiespektrum (351, 352) in Form eines Histogramms erzeugt wird, in dem die Klassen getrennte Energiebereiche sind, wobei das Auftreten jeder Klasse die Anzahl von Photonen ist, deren Energie innerhalb des Energiebereichs der betrachteten Klasse liegt, wobei die Grenzfrequenz des zweiten Tiefpassfilters durch die Anzahl der Klassen des Histogramms bestimmt wird, wobei der Fluss umso größer ist, je weniger Klassen das Histogramm umfasst.

3. Verfahren nach einem der Ansprüche 1 bis 2, wobei jedes von dem fotoempfindlichen Element empfangene Photon in einen Impuls umgewandelt wird, dessen Integral proportional zur Energie des betrachteten Photons ist.

4. Verfahren nach einem der Ansprüche 1 bis 3, wobei der Photonenfluss während eines vorbestimmten Erfassungsintervalls empfangen wird, wobei die Grenzfrequenzen des ersten und zweiten Tiefpassfilters in Abhängigkeit von dem für das vorhergehende Erfassungsintervall ermittelten Photonenfluss justiert werden.

5. Verfahren nach Anspruch 4, wobei der Photonenfluss durch die folgenden Schritte ermittelt wird:

▪ Ermitteln der von dem fotoempfindlichen Element während des vorhergehenden Erfassungsintervalls empfangenen Gesamtphotonenenergie $E_T$;

▪ Ermitteln der von dem fotoempfindlichen Element während des vorhergehenden Erfassungsintervalls empfangenen mittleren Photonenenergie $E_M$;

▪ Ermitteln des $N_{eff}$-Verhältnisses zwischen der Gesamtphotonenenergie $E_T$ und der mittleren Photonenenergie $E_M$, wobei der Quotient des Verhältnisses $N_{eff}$ über eine Dauer des vorhergehenden Erfassungsintervalls den Photonenfluss ergibt.

6. Verarbeitungsvorrichtung für eine spektrometrische Energiemessung eines Photonenflusses, der von einem fotoempfindlichen Element eines Detekors (15) empfangen werden kann, wobei das fotoempfindliche Element jedes Photon in ein elektrisches Signal umwandelt, von dem eine Charakteristik die Energie des empfangenen Photons repräsentiert, wobei die Vorrichtung (15) **dadurch gekennzeichnet** ist, dass sie Folgendes umfasst:

▪ eine Formungsschaltung (162), die ein erstes Tiefpassfilter umfasst, das jedes elektrische Signal filtert, wobei die Grenzfrequenz des ersten Tiefpassfilters in Abhängigkeit vom Photonenfluss justiert wird, wobei die Grenzfrequenz umso höher ist, je höher der Fluss ist;

▪ eine Messchaltung (163) zum Ermitteln der Charakteristik jedes gefilterten elektrischen Signals;

▪ eine Schaltung (164) zum Konstruieren von Spektren, die ein Energiespektrum (351, 352) für den empfangenen Photonenfluss in Abhängigkeit von der Charakteristik der gefilterten elektrischen Signale erzeugen; und

▪ ein Glättungsfilter (165), das ein zweites Tiefpassfilter umfasst, das das Energiespektrum (351, 352) filtert, wobei die Grenzfrequenz des zweiten Tiefpassfilters in Abhängigkeit vom Photonenfluss justiert wird, wobei die Grenzfrequenz umso tiefer ist, je höher der Fluss ist.

## Claims

1. A processing method for a spectrometric energy measurement of a photon flux that can be received by a photosensitive element of a detector (15), said method comprising the following successive steps:

   - converting (31) each photon received by said photosensitive element into an electric signal, a characteristic of which represents the energy of the considered photon;
   - filtering (32) each electric signal with a first low-pass filter (162), the cut-off frequency of which is adjusted as a function of the photon flux, the higher the flux, the higher the cut-off frequency;
   - determining (33) the characteristic of each filtered electric signal;
   - generating (34) an energy spectrum (351, 352) for the received photon flux as a function of the characteristic of the filtered electric signals; and
   - filtering (35) said energy spectrum (351, 352) with a second low-pass filter (165), the cut-off frequency of which is adjusted as a function of the photon flux, the higher the flux, the lower the cut-off frequency.

2. The method according to claim 1, wherein said energy spectrum (351, 352) is generated in the form of a histogram, in which the classes are distinct energy ranges, with the occurrence of each class being the number of photons for which the energy is within the energy range of the considered class, the cut-off frequency of the second low-pass filter being determined by the number of classes of said histogram, the higher the flux, the fewer classes the histogram comprises.

3. The method according to any one of claims 1 to 2, wherein each photon received by said photosensitive element is converted into a pulse, the integral of which is proportional to the energy of the considered photon.

4. The method according to any one of claims 1 to 3, wherein the photon flux is received during a predetermined acquisition interval, with the cut-off frequencies of the first and second low-pass filters being adjusted as a function of the photon flux determined for the preceding acquisition interval.

5. The method according to claim 4, wherein the photon flux is determined through the following steps:

   - determining the total photon energy $E_T$ received by said photosensitive element during the preceding acquisition interval;
   - determining the mean photon energy $E_M$ received by said photosensitive element during the preceding acquisition interval;
   - determining the ratio $N_{eff}$ of the total photon energy $E_T$ to the mean photon energy $E_M$, with the quotient of said ratio $N_{eff}$ over a duration of the preceding acquisition interval providing the photon flux.

6. A processing device for a spectrometric energy measurement of a photon flux that can be received by a photosensitive element of a detector (15), said photosensitive element converting each photon into an electric signal, a characteristic of which represents the energy of the received photon, said device (15) being **characterised in that** it comprises:

   - a shaping circuit (162) comprising a first low-pass filter filtering each electric signal, with the cut-off frequency of said first low-pass filter being adjusted as a function of the photon flux, the higher the flux, the higher the cut-off frequency;
   - a measuring circuit (163) determining the characteristic of each filtered electric signal;
   - a circuit (164) for constructing spectra generating an energy spectrum (351, 352) for the received photon flux as a function of the characteristic of the filtered electric signals; and
   - a smoothing filter (165) comprising a second low-pass filter filtering said energy spectrum (351, 352), with the cut-off frequency of said second low-pass filter being adjusted as a function of the photon flux, the higher the flux, the lower the cut-off frequency.

15

16

13

14

12

11

10

**FIG.1**

Détecteur photosensible — 15

Préamplificateur — 161

Circuit de mise en forme — 162

16

Circuit de mesure — 163

Générateur de spectre — 164

Filtre de lissage — 165

**FIG.2**

31/01/20

FIG.3

## RÉFÉRENCES CITÉES DANS LA DESCRIPTION

**Documents brevets cités dans la description**

- US 7504636 B1
- US 2005242979 A1